Europäisches Patentamt

European Patent Office

Office européen des brevets

(11) Veröffentlichungsnummer: **0 494 344 A1**

## EUROPÄISCHE PATENTANMELDUNG

(21) Anmeldenummer: **91116198.2**

(51) Int. Cl.5: **F02D 9/10**

(22) Anmeldetag: **24.09.91**

(30) Priorität: **09.01.91 DE 4100378**

(43) Veröffentlichungstag der Anmeldung:
**15.07.92 Patentblatt 92/29**

(84) Benannte Vertragsstaaten:
**DE FR GB IT**

(71) Anmelder: **Firma Carl Freudenberg
Höhnerweg 2-4
W-6940 Weinheim/Bergstrasse(DE)**

(72) Erfinder: **Sausner, Andreas
Hainbuchenstrasse 14 a
W-6000 Frankfurt/Main 71(DE)**
Erfinder: **Spies, Karl Heinrich, Dr.
Stettiner Strasse 14
W-6943 Birkenau(DE)**

(54) **Dichtsystem für Drosselklappenkonstrukfion mit Vollwelle.**

(57) Mittels einer Welle (1) verdrehbare Drosselklappe zur Verwendung im Ansaugrohr (3) einer Verbrennungskraftmaschine, wobei die Welle (1) als Vollwelle ausgebildet ist und die Drosselklappe aus einem die Welle (1) außenseitig umschließenden Werkstoffkörper (2) besteht. Am Werkstoffkörper (2) ist außenseitig eine sich beiderseits bis zu der Vollwelle erstreckende Dichtung (4) angebracht, die durch eine Drehung der Welle (1) in vollständigen Eingriff mit dem Ansaugrohr (3) bringbar ist. Das Ansaugrohr (3) mit allen darin enthaltenen Bauteilen setzt dem strömenden Medium einen sehr geringen Widerstand entgegen und ermöglicht eine exakte Regelung und Einstellung der Verbrennungskraftmaschine bei geschlossener Drosselklappe.

Fig. 2

EP 0 494 344 A1

Rank Xerox (UK) Business Services

Die Erfindung betrifft eine mittels einer Welle verdrehbare Drosselklappe zur Verwendung im Ansaugrohr einer Verbrennungskraftmaschine, wobei die Welle als Vollwelle ausgebildet ist und die Drosselklappe aus einem die Welle außenseitig umschließenden Werkstoffkörper besteht.

Drosselklappen haben die Aufgabe, den Volumenstrom eines strömenden Mediums durch eine Leitung oder ein Rohr zu regulieren. Dies ist auch im Ansaugrohr einer Verbrennungskraftmaschine der Fall. Um die Strömungsverluste des Kraftstoff-Luftgemisches im Ansaugrohr, an der Drosselklappe vorbei, so klein wie möglich zu halten, ist es erforderlich, die Widerstände an der Drosselklappenstirnseite und der Drosselklappenoberseite so gering wie möglich zu halten. Durch die Verringerung der Strömungsverluste steigt die Füllung im Brennraum, wodurch eine höhere Leistung der Maschine und eine bessere Ausnutzung des Kraftstoffs erzielt wird.

Außerdem müssen für eine gute Einstellung und Regelung des Motors eindeutige und klare Bedingungen im Ansaugrohr herrschen. Eine genaue Regelung und Einstellung des Leerlaufs einer Verbrennungskraftmaschine ist nur dann möglich, wenn ein genau bekannter oder überhaupt kein Leckluftstrom über die Drosselklappe strömt.

Es ist bekannt, zur Regulierung des Kraftstoff-Luftgemischs Drosselklappen einzusetzen, die aus einer Blechscheibe bestehen und durch die Verdrehung einer geschlitzten Welle betätigt werden. Die Blechscheibe ist mittig durch die geschlitzte Welle geschoben und auf dieser befestigt.

Es ist ebenfalls bekannt, daß in einigen Fällen eine Drosselklappe im Ansaugrohr angebracht ist, die die Welle umschließt, wie in DE-OS 2934216 dargestellt.

Außerdem sind Verfahren zum Aufbringen einer Polymerbeschichtung auf der Innenwand des Ansaugrohres im Bereich des Drosselorgans bekannt (DE-PS 3 243 996).

Die Drosselklappe, bestehend aus einer durch eine geschlitzte Welle geschobenen Blechscheibe, hat insbesondere den Nachteil, daß durch die strömungsungünstige Form der Klappe im Ansaugrohr Strömungsverluste entstehen. Durch die schlechtere Füllung des Brennraumes wird die Leistung der Maschine reduziert.

Außerdem bestehen erhebliche Schwierigkeiten, die geschlitzte Welle gegenüber der Blechscheibe abzudichten. Durch Fertigungstoleranzen, die im Sinne einer praxisgerechten und wirtschaftlichen Fertigung nicht auszuschließen sind, schließt die Drosselklappe den Ansaugkanal im Ansaugrohr nicht vollständig ab, so daß eine Einstellung und Regelung des Leerlaufs einer Verbrennungskraftmaschine nur schwierig vorzunehmen ist.

Umschließt bei bestehenden Konstruktionen die Drosselklappe eine Vollwelle, ergeben sich Nachteile bezüglich der Haltbarkeit der Begrenzungsflächen am Außenumfang der Drosselklappe und ihre Abdichtwirkung gegenüber des Ansaugrohres. Durch die in sehr spitzem Winkel einander angenäherten Oberflächen besteht die Gefahr, daß der Randbereich, der einstückig mit der Drosselklappe ausgebildet ist und daher aus gleichem Material besteht, mit zunehmender Gebrauchsdauer Ausbrüche aufweist, die eine einwandfreie Funktion der Verbrennungskraftmaschine in Betriebszuständen mit ganz oder fast geschlossener Drosselklappe verhindern.

Der Erfindung liegt die Aufgabe zugrunde, eine strömungsgünstig ausgebildete Drosselklappe zu entwickeln, die eine exakte Einstellung und Regelung der Verbrennungskraftmaschine bei geschlossener Drosselklappe (Leerlauf; Schiebebetrieb) ermöglicht.

Diese Aufgabe wird erfindungsgemäß dadurch gelöst, daß am Werkstoffkörper außenseitig eine sich beiderseits bis zu der Vollwelle erstreckende Dichtung angebracht ist und daß die Dichtung durch eine Drehung der Welle in vollständigen Eingriff mit dem Ansaugrohr bringbar ist.

Zur Herstellung der Drosselklappe kann sowohl ein polymerer Werkstoffkörper als auch ein metallischer Werkstoffkörper vorgesehen sein. Durch die Verwendung eines polymeren Werkstoffkörpers zur Herstellung der Drosselklappe ist eine Wärmeübertragung auf die Drosselklappenwelle so gut wie ausgeschlossen. Für die Erzielung eines guten Betriebsverhaltens der Verbrennungskraftmaschine ist das von großem Vorteil. Durch die Verwendung einer Dichtung auf dem Außenumfang der Drosselklappe ist es möglich, die Öffnungsweite, ausgehend von der Schließstellung, sehr präzise einzustellen. Auch hierdurch läßt sich ein verbessertes Betriebsverhalten der Verbrennungskraftmaschine erzielen. Kommt ein polymerer Werkstoffkörper zur Anwendung, der entlang seines Außenumfanges so flexibel ist, daß er eine Dichtfunktion übernehmen kann, kann der Werkstoffkörper einstückig mit einer Dichtlippe ausgebildet sein.

Die Drosselklappe kann kraft- und/oder formschlüssig auf der Welle angebracht sein. Die beiden Teile können gegeneinander dadurch abgedichtet werden, daß der Werkstoffkörper stirnseitig durch umlaufende, erste Dichtflächen begrenzt ist, die sich quer zu seiner Achse erstrecken.

Zur Befestigung der elastomeren Dichtung, die den Durchfluß zwischen Drosselklappe und Ansaugrohr bei geschlossener Drosselklappe abdichtet, ist eine zweite Dichtfläche nötig. Die ersten Dichtflächen können mit den zweiten Dichtflächen ineinander übergehend ausgebildet sein. Dieser fließende Übergang ermöglicht eine unkomplizierte Produktion der Drosselklappe.

Zur Abdichtung der ersten Dichtfläche sind sekundäre Dichthilfsmittel vorzusehen, die beispielsweise durch Gleitringdichtungen gebildet sind. Gleitringdichtungen bauen klein und bieten sich daher für Einsatzzwecke mit begrenztem Einbauraum an.

Die Dichtungen auf den zweiten Dichtflächen können mit dem Werkstoffkörper verbunden sein. Diese Anordnung gewährleistet bei eventuell auftretendem Verschleiß der Dichtung eine einfache Instandsetzung.

Um eine einwandfreie Dichtwirkung zu erzielen, sind die Dichtungen beispielsweise durch Lippendichtungen gebildet, die aus einem elastomeren Werkstoff bestehen. Dieser elastomere Werkstoff hat den Vorteil, daß er sich durch elastische Verformung der Oberfläche des Ansaugrohres optimal anpaßt.

Zur Verbindung von Dichtung und Werkstoffkörper können die Dichtungen durch unmittelbares Anformen und Verfestigen mit dem Werkstoffkörper verbunden werden. Durch diese Art der Verbindung wird das geringe Gewicht und die damit verbundene geringe Massenträgheit der Drosselklappe nicht beeinflußt. Außerdem ist dieses Verfahren in fertigungstechnischer Hinsicht vorteilhaft.

Bei geöffneter Drosselklappe ist diese vom durchströmenden Medium so widerstandsarm wie möglich zu passieren. Daher ist der Werkstoffkörper zweckmäßigerweise innerhalb der ersten und zweiten Dichtflächen durch Oberflächen begrenzt, die frei von sprunghaften Richtungsänderungen sind und beispielsweise so gestaltet sind, daß die Oberflächen in Richtung der zweiten Dichtflächen zunehmend einander angenähert sind.

Das Aussehen und die Wirkungsweise der Erfindung ist in den folgenden Ausführungsbeispielen vereinfacht dargestellt und wird im folgenden näher beschrieben:

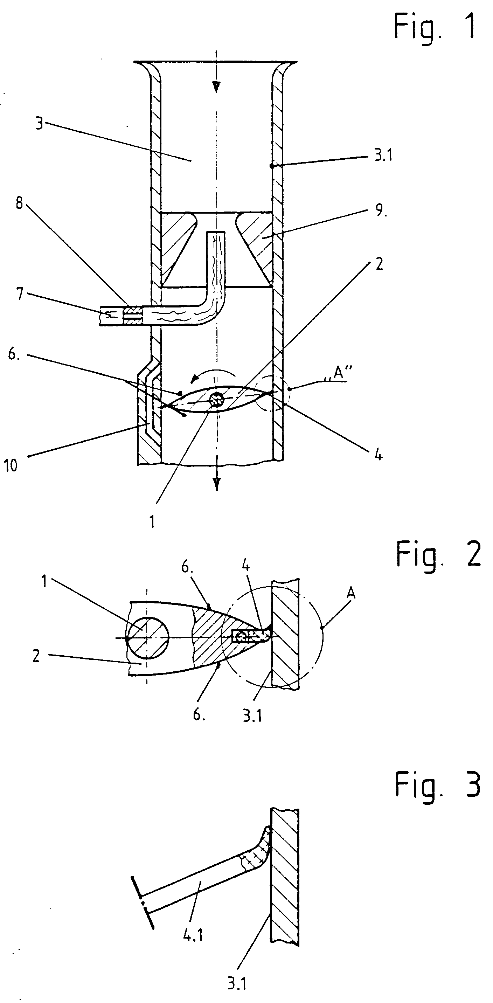

In Figur 1 ist ein Ansaugrohr 3 mit den darin enthaltenen Bauteilen zur Regulierung des Kraftstoffluftgemisches dargestellt.

Die vom Motor angesaugte Luft strömt in das Ansaugrohr 3 ein. Im Ansaugrohr 3 ist eine Düse 9 angebracht. Dort wird der Luft Kraftstoff aus dem Spritzrohr 7 zugemischt.

Die Drosselklappe 2 reguliert die zum Motor gelangende Gemischmenge und somit das Motordrehmoment. Die Hauptdüse 8 beeinflußt die Gemischzusammensetzung.

Für eine gute Zerstäubung des Kraftstoffes ist eine große Luftgeschwindigkeit nötig, die in der Düse 9 erzeugt wird. Gleichzeitig entsteht ein Unterdruck, der den Kraftstoff aus dem Spritzrohr 7 mitreißt. Im Leerlauf wird der Motor bei geschlossener Drosselklappe 2 über die Bypassbohrung 10 mit Kraftstoffluftgemisch versorgt. Die Bypassbohrung 10 ist so ausgelegt, daß ein guter Übergang vom Leerlauf- auf das Hauptsystem gegeben ist.

Die Erfindung selbst gilt für jede Durchflußregelung sowohl im Vergaser - wie hier zur Verdeutlichung dargestellt - als auch in Einspritzsystemen von Verbrennungskraftmaschinen.

In Figur 2 ist der Ausschnitt A aus Figur 1, der besseren Übersichtlichkeit wegen, vergrößert dargestellt.

Die strömungsgünstige Drosselklappe 2 aus polymerem oder metallischem Werkstoff umschließt die Vollwelle 1. An der Drosselklappe 2 ist außenseitig eine Dichtung 4 angebracht, die durch Drehung der Welle 1 mit der Innenwand des Ansaugrohres 3.1 in Eingriff bringbar ist. Die Dichtung 4 ist mit der Drosselklappe 2 verbunden und besteht zur besseren Abdichtung des Ansaugrohres aus einem elastomeren Werkstoff.

Figur 3 zeigt die beiden Einzelteile, Dichtung 4, die zum Beispiel als Lippendichtung 4.1 ausgebildet ist, mit der Innenwand des Ansaugrohres 3.1 im Eingriff.

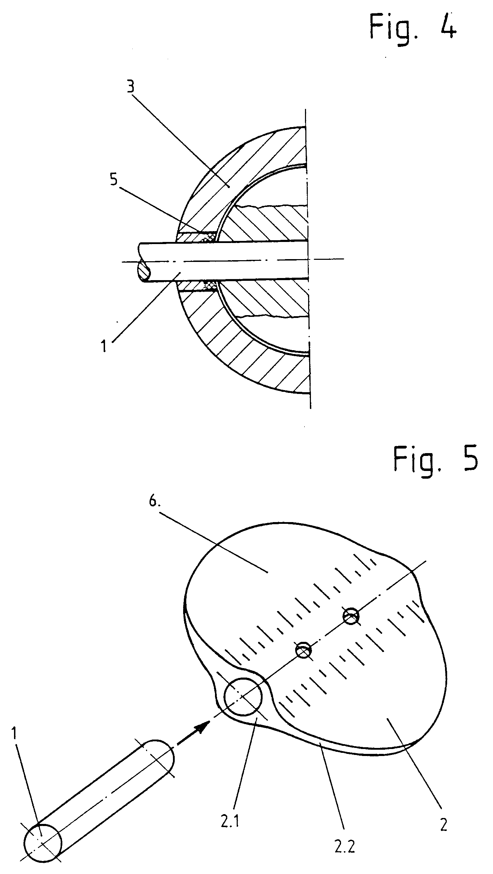

In Figur 4 ist die Lagerung der Drosselklappe 2 im Ansaugrohr 3 dargestellt.

Die Vollwelle 1, die wegen ihrer größeren Stabilität dünner ausgeführt werden kann als eine geschlitzte Welle, ist durch eine Gleitringdichtung S im Ansaugrohr 3 gelagert. Durch den vollen Querschnitt der Welle 1 ist der Verschleiß am Gleitring 5 deutlich reduziert.

Figur 5 zeigt eine strömungsgünstige Drosselklappe, die aus einem polymeren oder metallischen Werkstoffkörper 2 besteht. Am Umfang des Werkstoffkörpers 2 befinden sich die ersten 2.1 und zweiten 2.2 Dichtflächen, die ineinander übergehend ausgebildet sind.

Die Welle 1 ist als Vollwelle ausgebildet und wird im eingebauten Zustand von dem Werkstoffkörper 2 vollständig umschlossen. Die Wellen-Nabenverbindung kann kraft- und/oder reibschlüssig hergestellt werden.

**Patentansprüche**

1. Mittels einer Welle verdrehbare Drosselklappe zur Verwendung im Ansaugrohr einer Verbrennungskraftmaschine, wobei die Welle als Vollwelle ausgebildet ist und die Drosselklappe aus einem die Welle außenseitig umschließenden Werkstoffkörper besteht, dadurch gekennzeichnet, daß am Werkstoffkörper (2) außenseitig eine sich beiderseits bis zu der Vollwelle erstreckende Dichtung (4) angebracht ist und daß die Dichtung (4) durch eine Drehung der Welle (1) in vollständigen Eingriff mit dem Ansaugrohr (3) bringbar ist.

2. Drosselklappe nach Anspruch 1, dadurch gekennzeichnet, daß der Werkstoffkörper (2) stirnseitig durch umlaufende erste Dichtflächen (2.1) begrenzt ist, die sich quer zu seiner Achse erstrecken.

3. Drosselklappe nach Anspruch 2, dadurch gekennzeichnet, daß die ersten Dichtflächen (2.1) mit zweiten Dichtflächen (2.2) ineinander übergehend ausgebildet sind.

4. Drosselklappe nach Anspruch 1 bis 3, dadurch gekennzeichnet, daß im Bereich der ersten Dichtflächen (2.1) sekundäre Dichthilfsmittel vorzusehen sind.

5. Drosselklappe nach Anspruch 4, dadurch gekennzeichnet, daß die Dichthilfsmittel durch Gleitringdichtungen (5) gebildet sind.

6. Drosselklappe nach Anspruch 1 bis 5, dadurch gekennzeichnet, daß im Bereich der zweiten Dichtflächen (2.2) mit dem Werkstoffkörper verbundene Dichtungen (4) vorgesehen sind.

7. Drosselklappe nach Anspruch 6, dadurch gekennzeichnet, daß die Dichtungen (4) durch Lippendichtungen (4.1) gebildet sind, die aus einem elastomeren Werkstoff bestehen.

8. Drosselklappe nach Anspruch 7, dadurch gekennzeichnet, daß die Dichtungen (4) durch unmittelbares Anformen und Verfestigen mit dem Werkstoffkörper (2) verbunden sind.

9. Drosselklappe nach Anspruch 1 bis 8, dadurch gekennzeichnet, daß der Werkstoffkörper (2) innerhalb der ersten (2.1) und zweiten (2.2) Dichtflächen durch Oberflächen (6) begrenzt ist, die frei von sprunghaften Richtungsänderungen sind.

10. Drosselklappe nach Anspruch 9, dadurch gekennzeichnet, daß die Oberflächen (6) in Richtung der zweiten Dichtflächen (2.2) zunehmend einander angenähert sind.

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 549 123 (C.J.BELL)<br>* Spalte 1, Zeile 55 - Spalte 2, Zeile 3 *<br>* Spalte 3, Zeile 26 - Spalte 4, Zeile 2 *<br>* Abbildungen 3-5,7 *<br>--- | 1-4,6-8 | F02D9/10 |
| X | US-A-2 385 510 (S.G.HARWOOD)<br>* Seite 1, rechte Spalte, Zeile 51 - Seite 2, linke Spalte, Zeile 38; Abbildungen 1,2,6-11 *<br>--- | 1-4,6-8 | |
| Y | US-A-4 344 396 (M.YAMADA)<br>* Spalte 1, Zeile 9 - Zeile 24 *<br>* Spalte 2, Zeile 10 - Zeile 22 *<br>* Spalte 6, Zeile 33 - Zeile 40 *<br>* Spalte 7, Zeile 10 - Zeile 28; Abbildungen 5,6,11,13 *<br>--- | 1-3,6-8 | |
| Y | GB-A-1 061 651 (THE VILLIERS ENGINEERING CO.LTD.)<br>* Seite 1, Zeile 54 - Seite 2, Zeile 4 *<br>* Abbildungen *<br>--- | 1-3,6-8 | |
| A | FR-A-1 127 961 (ETABLISSEMENTS NEYRPIC)<br>* Abbildungen *<br>--- | 1 | **RECHERCHIERTE SACHGEBIETE (Int. Cl.5)**<br><br>F02D<br>F16K |
| A | EP-A-0 272 373 (VDO ADOLF SCHINDLING AG)<br>* Anspruch 1; Abbildungen 1-3 *<br>--- | 1 | F02M |
| A | FR-A-2 616 873 (AUTOMOBILES PEUGEOT)<br><br>----- | | |

Der vorliegende Recherchenbericht wurde für alle Patentansprüche erstellt

| Recherchenort | Abschlußdatum der Recherche | Prüfer |
|---|---|---|
| DEN HAAG | 09 APRIL 1992 | ALCONCHEL Y UNGRIA J |